Europäisches Patentamt

European Patent Office

Office européen des brevets

(19)

(11) Numéro de publication: **0 186 579**
**B1**

(12) **FASCICULE DE BREVET EUROPEEN**

(45) Date de publication du fascicule du brevet: **24.10.90**

(51) Int. Cl.⁵: **H 04 Q 1/14, G 02 B 6/44**

(21) Numéro de dépôt: **85402495.7**

(22) Date de dépôt: **16.12.85**

(54) **Répartiteur pour câbles optiques.**

(30) Priorité: **14.12.84 FR 8419201**

(43) Date de publication de la demande:
**02.07.86 Bulletin 86/27**

(45) Mention de la délivrance du brevet:
**24.10.90 Bulletin 90/43**

(84) Etats contractants désignés:
**BE DE FR GB IT NL SE**

(56) Documents cités:
**EP-A-0 101 970**
**EP-A-0 116 480**
**FR-A-2 531 576**

(73) Titulaire: **Nozick, Jacques E.**
**C.T.M. 28 rue Broca**
**F-75005 Paris (FR)**

(72) Inventeur: **Nozick, Jacques E.**
**C.T.M. 28 rue Broca**
**F-75005 Paris (FR)**

(74) Mandataire: **Pinguet, André**
**Cabinet de Proprieté Industrielle CAPRI 28 bis,**
**avenue Mozart**
**F-75016 Paris (FR)**

Courier Press, Leamington Spa, England.

## Description

La présente invention a pour objet un répartiteur pour câbles optiques.

L'utilisation de câbles, qu'ils soient métalliques ou optiques, comme canal pour le transit d'informations entre un ou plusieurs émetteurs et un ou plusieurs récepteurs (émetteurs et récepteurs de télévision, postes d'abonné des téléphones, par exemple) nécessite la mise en place entre émetteur(s) et récepteur(s) d'une installation tampon de répartition (ou "répartiteur") au niveau de laquelle chaque ligne, en particulier réceptrice, puisse être isolée.

Il est connu de réaliser des installations de ce type dans les centraux téléphoniques. Ces installations comportent, de façon usuelle, des batteries de colonnes de répartition (appelées "têtes de câble) lesquelles, individuellement, se composent généralement d'une goulotte métallique verticale et de modules ayant diverses fonctions. Certains de ces modules sont reliés au central téléphonique par un câble pénétrant par la base ou le sommet des goulottes. Des modules fixés sur des têtes de câble différentes peuvent être reliés par des conducteurs (appelés "jarretières") disposés selon des trajets bien définis à l'extérieur des répartiteurs. L'agencement et le câblage de ces installations doit satisfaire à deux impératifs principaux: l'occupation optimale de l'espace et la possibilité de réaliser facilement tous types de connexions: en effet, étant donné le volume important des messages qui transitent par elles ainsi que le nombre souvent très élevé des récepteurs (et éventuellement des émetteurs), il importe qu'on loge le maximum de connexions dans le minimum de place et qu'on rende ces connexions aussi mobiles que possible.

Dans les répartiteurs pour câbles optiques les impératifs évoqués ci-dessus demeurent, mais il n'est pas possible d'y satisfaire de la même façon que dans les répartiteurs pour câbles métalliques car les fibres optiques, de par leur nature, n'offrent pas la même souplesse d'utilisation que les câbles métalliques: elles ont un rayon de courbure limite et ne peuvent être rallongés facilement.

Il est connue, par FR—A—2 531 576 un répartiteur pour câbles optiques comportant une ossature verticale profilée en U et des cassettes de répartition. La présente invention a pour objet des perfectionnements à ce type de répartiteur.

Le répartiteur pour câbles optiques (constitués de plusieurs joncs servant chacun de support à plusieurs fibres optiques) selon l'invention comporte au moins une tête de câble comprenant au moins une cassette de répartition et une goulotte verticale, rainurée, profilée en U, laquelle goulotte supporte au moins un lit pour jarretières, est remarquable notamment en ce que les moyens de stockage des joncs à l'intérieur de la goulotte comportent des tambours fixés au fond de la goulotte et déplaçables selon une direction verticale, et en ce que les tambours comportent un secteur de disque n'excédant pas environ 90°, de rayon approximativement égal au rayon de courbure des joncs; un rebord circulaire, un trou perpendiculaire aux faces parallèles du secteur, par lequel passe une vis dont la tête est prise dans la rainure et dont l'extrémité libre reçoit une molette, au moins un toc de guidage disposé sur la face arrière du tambour.

Chaque cassette du répartiteur selon l'invention comporte un boîtier, une platine amovible pour supporter au moins un connecteur ou un multiplexeur, un couvercle et des moyens de stockage pour emmagasiner les fibres optiques.

Selon une caractéristique de l'invention, les moyens de stockage pour emmagasiner les joncs comme ceux pour emmagasiner les fibres optiques comportent des tambours.

Selon une autre caractéristique de l'invention les tambours pour emmagasiner les joncs, les tambours pour emmagasiner les fibres ainsi que les tambours triples et d'avant comportent au moins une partie circulaire dont le rayon est respectivement approximativement égal au rayon de courbure limite des joncs, des fibres optiques, et des jarretières.

Selon encore une autre caractéristiques de l'invention, les montants parallèles des goulottes sont distants d'environ le double du rayon du courbure limite des joncs.

D'autres caractéristiques et avantages de la présente invention apparaîtront mieux à la lecture de la description qui va suivre, faite en relation avec les dessins annexés sur lesquels:

La figure 1 est une vue de droite d'une tête de câble pour câble optique selon l'invention;

La figure 2 est une vue de face d'un tambour ajustable pour le stockage des joncs;

la figure 3 est une vue en coupe selon la ligne A—A de la tête de câble représentée sur la figure 1;

La figure 4 est une vue en perspective simplifiée du confluent d'un tambour triple et d'un lit de jarretière horizontal; et

La figure 5 est une vue de face simplifiée de trois têtes de câble du répartiteur selon l'invention.

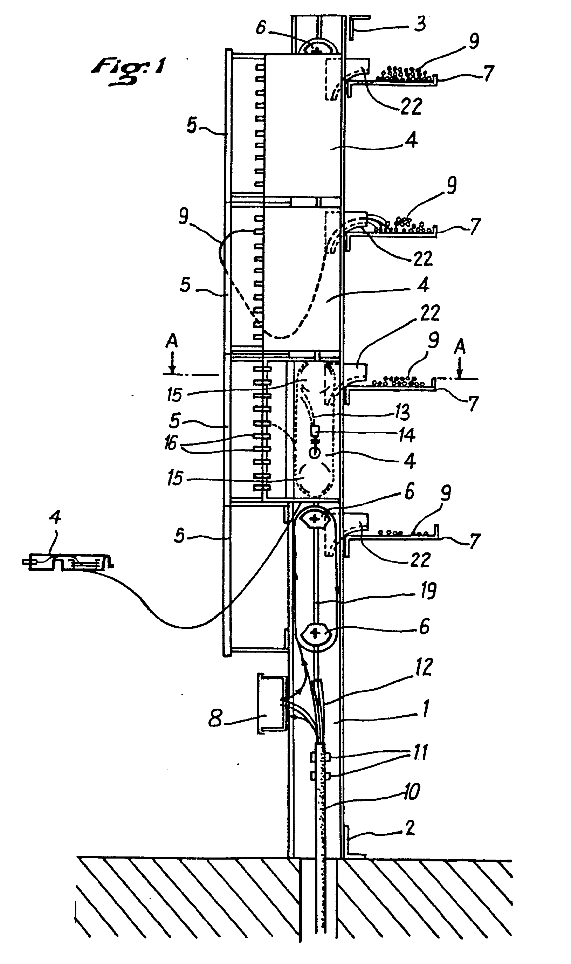

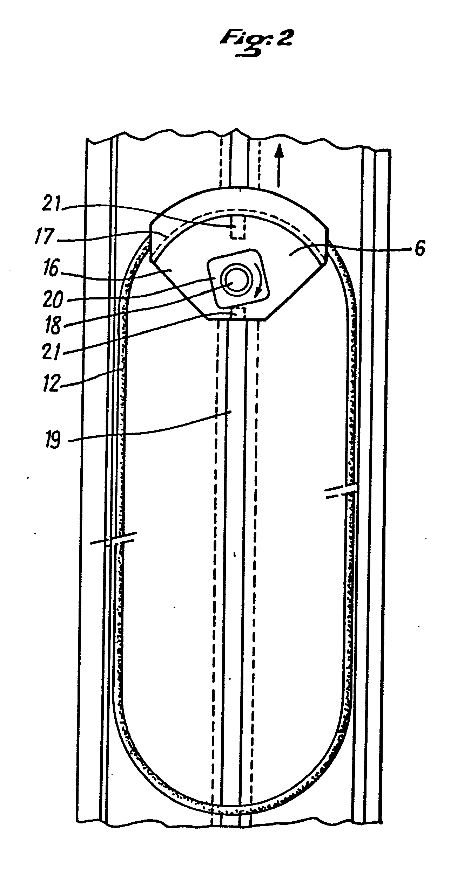

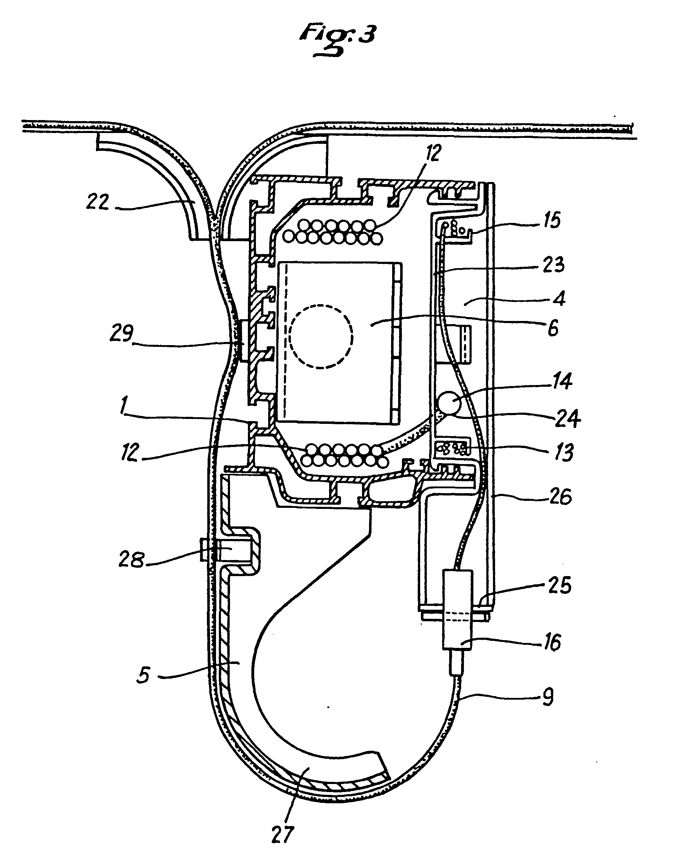

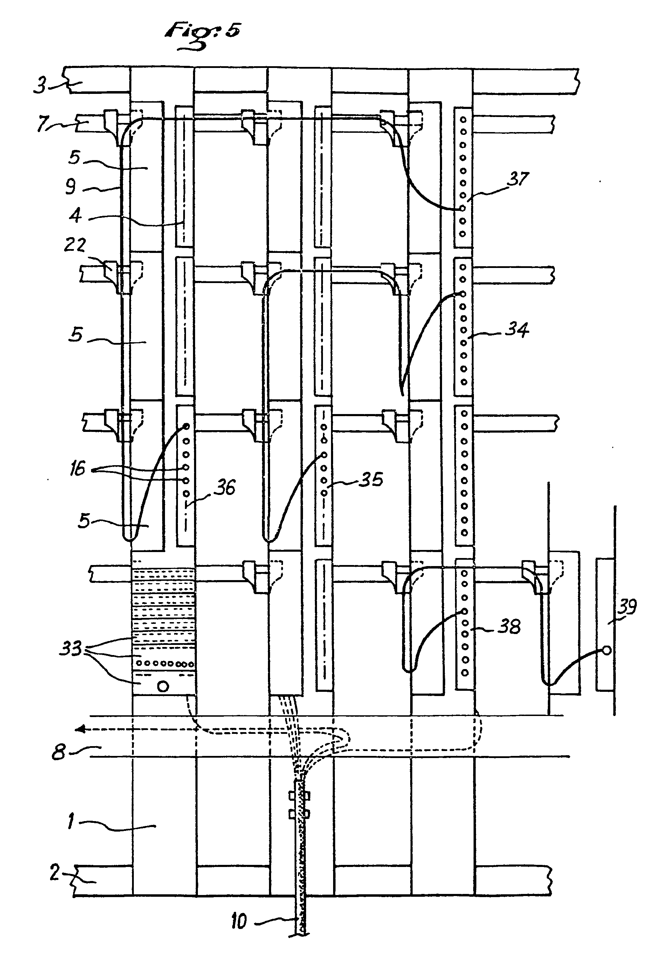

La tête de câble pour câble optique représentée sur la figure 1 comporte une goulotte 1, profilée en U et assujettie à chacune de ses extrémités à une cornière 2, 3. Cette goulotte est métallique, d'aluminium généralement, et comporte des rainures longitudinales permettant, la fixation rapide, par encliquetage notamment, d'éléments divers tels que cassettes 4, tambours 5, 6, lits 7 de "jarretières" (on appelle "jarretière" 9 une fibre optique qui relie deux cassettes), gaines 8, etc. Un câble optique 10, comportant un nombre déterminé de joncs 12 (dix par exemple) servant de support à un nombre déterminé de fibres optiques 13 (dix par exemple), pénètre dans la tête de câble par le sommet ou par la base (cas des figures 1 et 5) de la goulotte 1, où il est fixé par des attaches 11. Les joncs 12 divergent au-dessus de ces attaches et vont alimenter une (ou plusieurs) gaine(s) 8 et/ou des cassettes 4. En principe on prévoit que chaque jonc 12 n'alimente qu'une cassette 4. Au niveau de chaque cassette 4, la goulotte 1 contient deux tambours 6, fixés soit au fond de la goulotte elle-même, avantageusement de façon à pouvoir être translatés (mode de réalisation représenté sur les figures 2 et 3), soit au côté du boitier 23 des cassettes 4 parallèle au fond de la goulotte 1 (variante de réalisation non représentée). Les tambours 6 sont destinés à recevoir et à stocker 1 l'excédent de jonc d'alimentation. En effet, comme il est difficile de rallonger une fibre optique (et a fortiori un jonc qui en comporte plusieurs) et que l'on veut être en mesure de changer librement les connexions dans une même tête de câble, les joncs sont toujours surdimensionnés. En outre, la longueur de jonc en excédent permet d'enlever une cassette de la goulotte 1 et de la placer à quelque distance de là sur un support horizontal, par exemple, pour y effectuer un travail, le cas échéant. Chaque jonc 12 est donc lové sur une partie, -variable-, de sa longueur autour de deux tambours 6 à l'intérieur de la goulotte 1 qui assure de la sorte la fonction d'enceinte protectrice. L'extrémité de chacun d'eux pénètre dans une cassette 4 où les fibres optiques 13 qu'ils portent sont séparées par un dispositif approprié 14 puis lovées sur une certaine longueur autour de deux tambours 15 avant d'être raccordées chacune à un connecteur (ou multiplexeur) 16. C'est pour une raison identique à celle invoquée plus haut à propos des joncs 12 que l'on n'ajuste pas la longueur des fibres optiques 13 à l'intérieur de chaque cassette 4: le rallongement de ces fibres étant difficile, on prévoit un excédent de longueur suffisant pour pouvoir à volonté défaire des connexions et en établir d'autres à l'intérieur d'une même cassette.

Dans la tête de câble pour câble optique selon l'invention, on prévoit donc, pour l'excédent de longueur des fibres d'un même jonc deux aires de stockage succesives: la première à l'intérieur de la goulotte 1, où chaque jonc est lové autour de deux tambours 6; la seconde, à l'intérieur de chaque cassette 4, où les fibres portées par chaque jonc sont désolidarisées de leur support et lovées autour de deux tambours 15. Les tambours 6 et 15 ne sont pas identiques, —les premiers sont ajustables, pas les seconds—, mais ont en commun d'être constitués par des secteurs de disques d'angle au maximum égal à environ 90° et de rayon approximativement égal au rayon de courbure des fibres optiques. Les tambours 15, comme il apparaît sur la figure 1, comportent quatre éléments courbes, d'environ 30° chacun, répartis régulièrement sur une circonférence. Ils sont fixes à l'intérieur des cassettes 4. Les tambours 6, en revanche, quand ils sont fixés au fond de la goulotte 1 (cas du mode de réalisation représenté sur les figures 2 et 3), et non au côté du boîtier 23 des cassettes 4 parallèle au fond de ladite goulotte (variante de réalisation non représentée), sont mobiles au fond de la goulotte 1. Sur la figure 2, on voit qu'ils sont constitués d'un secteur de disque 16, d'angle au centre égal à environ 90°, comportant un rebord circulaire 17 pour contenir la ou les couches d'enroulements de jonc 12. L'épaisseur de ces tambours peut atteindre les 2/3 voire les 3/4 de la longueur des montants parallèles du profilé en U qui constitue la goulotte 1, ce qui permet de stocker une longueur de jonc importante sachant qu'usuellement les trois côtés du profilé en U sont approximativement égales et que l'on prévoit la base du U légérement supérieure à deux fois le rayon de courbure des fibres optiques (ceci dans le but de rendre des installations les plus compactes possibles). Les tambours 6 sont rendus solidaires de la goulotte 1 grâce à une vis 18 qui les traverse de part en part, dont la tête est retenue dans une rainure 19 médiane, longitudinale, en forme de T, ménagée dans la base du profilé métallique et sur l'extrémité de laquelle est vissée une moletté 20 que l'on peut serrer et desserrer à la main pour fixer lesdites tambours sur la goulotte 1 à la hauteur souhaitée. Les tambours 6 comportent en outre, faisant saillie sur leur face arrière, des tocs de guidage 21 qui pénètrent dans la rainure 19 et les empêchent de pivoter autour des vis 18. La mobilité de ces tambours, jointe à leur épaisseur relativement importante par rapport à la section des joncs 12 permet une grande souplesse et une grande capacité de stockage.

La figure 3, qui est une vue en coupe de la tête de câble de la figure 1 selon la ligne A—A, permet d'apprécier le détail du dispositif au niveau de chaque cassette. Sur cette figure on reconnaît le profilé métallique en U muni de nombreuses rainures (goulotte 1) à l'intérieur duquel et sur lequel sont assujettis un tambour 6 autour duquel est lové un jonc 12, une cassette 4, un tambour d'avant 5 et un tambour triple 22. La cassette 4 comporte un boîtier 23 encliqueté sur a goulotte 1 comprenant deux tambours 15, autour desquels sont lovées les fibres 13, et un orifice 24 pour laisser passer le jonc 12; une platine 25 amovible sur laquelle sont fixés les connecteurs ou multiplexeurs 16; on couvercle 26. (Sur la figure 1 les deux cassettes supérieures sont représentées munies de leur couvercle 26). On prévoit d'utiliser des boîtiers de longueur et d'épaisseur variables selon les besoins. Dans les cas où ces boîtiers sont plus longs que le boîtier de dimensions standard représenté sur la figure 3, on dispose une pièce faisant office d'entretoise (appelée "écarteur") entre la goulotte 1 et le tambour d'avant 5 de façon que le rayon de courbure de la fibre contenue dans la jarretière 9 soit respecté. Le tambour d'avant 5 comporte en effet une portion de cylindre 27, de rayon approximativement égal au rayon de courbure des fibres optiques et interceptant un angle d'environ 120°. Pour que les jarretières 9 ne subissent pas de contraintes outrepassant leur résistance à la flexion, il importe que l'extrémité de la partie circulaire 27 soit à distance fixe des connecteurs 16. D'où la nécissité d'un "écarteur" lorsqu'on utilise des cassettes plus longues que les cassettes standard. Pour maintenir les jarretières 9 appliqués sur le tambour d'avant 5 on fixe sur celui-ci des attaches 28 à fermeture automatique d'un type connu en soi. On prévoit de loger l'excèdent éventuel de jarretière dans un espace de stockage situé entre le tambour d'avant 5 et l'arrière de la goulotte 1. Cet espace est ouvert sur un côté et limité sur l'arriére par l'aplomb des tambours triples 22, sur l'autre côté par la base de la goulotte 1, et sur l'avant par la saillie du tambour d'avant 5 lequel est avantageusement décalé latéralement par rapport audit montant. Pour éviter que la boucle de la jarretière ne s'écarte de la goulotte 1 on dispose le long de celle-ci des attaches rapides 29 (de type "Velcro" ou équivalent).

On a vu plus haut en décrivant les particularités d'une tête de câble pour câble optique selon l'invention, —à l'intérieur de la goulotte 1 comme à l'intérieur de chaque cassette 4—, que l'utilisation des fibres optiques imposait des contraintes dues à l'existence d'un rayon de courbure limite et à la quasi-impossibilité de rallonger facilement un jonc ou une fibre trop courts. Les mêmes problèmes se posent naturellement pour les circuits de fibres aménagés à l'extérieure des têtes de câble, pour les jarretières 9 notamment. Pour les résoudre on utilise un certain nombre de dispositifs particuliers et on fait suivre aux jarretières 9 des trajets établis selon un procédé défini.

Les dispositifs particuliers sont les tambours d'avant 5, qui ont été décrits plus haut, les lits 7 de jarretières horizontaux et les tambours triples 22 que l'on dispose avantageusement sur l'arrière de la tête de câble (les lits 7 de jarretières horizontaux ainue les tambours triples 22 peuvent néanmoins être disposés sur l'avant de la tête de jarretière).

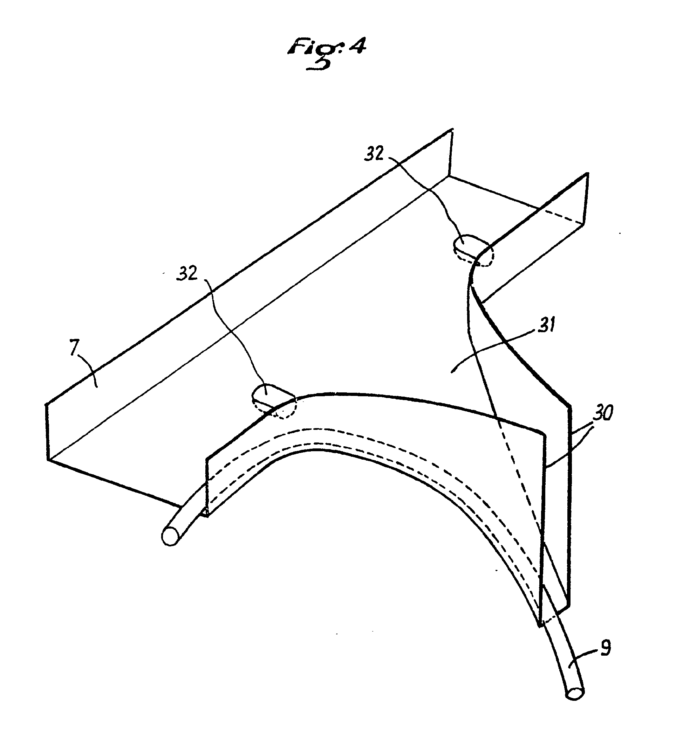

On a représenté sur la figure 4 un tambour de ce type: on voit qu'il comporte deux parois verticales 30 courbes, et une partie oblique 31, courbe également. Le rayon de courbure de ces parois est approximativement égal à celui des fibres. En outre, ce tambour comporte deux doigts de guidage 32 destinés à maintenir les jarretières dans le lit 7, au confluent dudit tambour et dudit lit. Les tambours triples 22 ainsi que les lits 7 qu'ils jouxtent sont assujettis aux goulottes 1 au niveau de chaque étage de cassettes, au-dessous du connecteur 16 supérieur.

De exemples de trajets de jarretière sont donnés sur la figure 5. Sur cette figure, on a.représenté trois têtes de câble dont l'une (celle de gauche) présente la particularité de comporter à la fois des cassettes 4 alimentées par câble optique et des modules 33 alimentés par câble métallique tels que modules de raccordement pour câbles de cuivre, pour câbles coaxiaux, racks contenant des circuits électroniques ou optoélectroniques, par exemple. Les deux autres têtes de câble comportent chacune quatre cassettes 4 (ce nombre est purement arbitraire). Le procédé employé pour établir le trajet d'une jarretière 9 entre deux connecteurs 16 situés sur deux têtes de câble différentes comporte les étapes suivantes: on applique la jarretière 9 sur le tambour d'avant 5; on l'y assujettit au moyen d'une attache 28 à fermeture automatique; on fait faire à l'excédent éventuel de jarretière une boucle le long de la base de la goulotte 1 sur laquelle on maintient ladite boucle au moyen d'une attache rapide 29; on fait suivre ensuite à la jarretière un trajet ascendant (il en est toujours ainsi) jusqu'à un tambour triple 22: —celui de la cassette d'où elle provient (cassette de départ) si la cassette qu'elle doit atteindre (cassette d'arrivée) est située au même niveau que la cassette de départ ou à un niveau inférieur—celui de la cassette, située sur la même tête de câble que la cassette de départ au niveau de la cassette d'arrivée, si la cassette d'arrivée est situé à un niveau supérieure au niveau de la cassette de départ; on fait courir la jarretière dans le lit 7, où débouche le tambour triple 22 déterminé précédemment, jusqu'au tambour triple fixé à la tête de câble sur lequel se trouve la cassette d'arrivée; on fait suivre à la jarretière un trajet descendant jusqu'à la cassette d'arrivée; on raccorde la jarretière au connecteur choisi, après l'avoir aussjettie au tambour d'avant 5 et, le cas échéant, avoir formé une boucle avec sa longueur en excédent.

Sur la figure 5 les trois types de tajet sont illustrés:

—cassette de départ située à un niveau supérieure à celui de la cassette d'arrivée: jarretières reliant la cassette 34 à la cassette 35 et la cassette 37 à la cassette 36.

—Cassette de départ située au même niveau que la cassette d'arrivée: jarretière reliant la cassette 38 à la cassette 39.

—Cassette de départ située à un niveau inférieur à celui de la cassette d'arrivée: jarretières reliant la cassette 36 à la cassette 37 et la cassette 35 à la cassette 34.

**Revendications**

1. Répartiteur pour câbles optiques constituées de plusieurs joncs (12) servant chacun de support à plusieurs fibres optiques (13) comportant au moins une tête de câble comprenant au moins une cassette de répartition (4) et une goulotte (1) verticale, rainurée, profilée en U, supportant au moins un lit (7) pour jarretières (9), la goulotte (1) contentant à l'intérieur de ses montants au niveau de chaque cassette (4) des moyens de stockage pour emmagasiner les joncs (12), caractérisé en ce que les moyens de stockage des joncs (12) à l'intérieur de la goulotte (1) comportent des tambours (6) fixés au fond de la goulotte (1) et déplaçables selon une direction verticale, et en ce que les tambours (6) comportent un secteur de disque (16) n'excédant pas environ 90°, de rayon approximativement égal au rayon de courbure des joncs (12); un rebord circulaire (17), un trou perpendiculaire aux faces parallèles du secteur (16), par lequel passe une vis (18) dont la tête est prise dans la rainure (19) et dont l'extrémité libre reçoit une molette (20), et au moins un toc de guidage (21) disposé sur la face arrière du tambour.

2. Répartiteur selon la revendication 1, caractérisé en ce que, au niveau de chaque cassette (4), la goulotte (1) supporte à l'extérieur de ses montants, sur l'avant ou sur l'arrière de la tête de câble, des moyens de guidage (22) pour imprimer à des jarretières (9) un changement de direction.

3. Répartiteur selon la revendication 2, caractérisé en ce que les moyens de guidage comportent un tambour triple (22).

4. Répartiteur selon une des revendications précédentes, caractérisé en ce que la goulotte (1) supporte en outre à l'extérieur de des montants un tambour d'avant (5) pour le guidage des jarretières (9).

5. Répartiteur selon une des revendications précédentes, caractérisé en ce que les deux montants parallèles de la goulotte (1) sont distants d'environ deux fois le rayon de courbure limite des joncs (12).

6. Répartiteur selon une des revendications précédentes, caractérisé en ce que la goulotte (1) comporte des rainures appropriées à recevoir des cassettes et modules d'alimentation de type différent.

7. Répartiteur selon une des revendications précédentes, caractérisé en ce que le montant constituant le fond de la goulotte (1) comporte sur sa face intérieure une rainure médiane longitudinale (19).

8. Répartiteur selon une des revendications précédentes, caractérisé en ce que les moyens de stockage des joncs (12) à l'intérieur de la goulotte (1) sont fixés au côté du boîtier (23) des cassettes (4) parallèle au fond de ladite goulotte (1).

9. Répartiteur selon la revendication 4, caractérisé en ce que les tambours d'avant comportent une portion de cylindre (27) interceptant un angle n'excédant pas environ 120° et de rayon approximativement égal au rayon de courbure limite des jarretières (9).

10. Répartiteur selon la revendication 4, caractérisé en ce que le tambour d'avant (5) comporte une partie faisant saillie latéralement par rapport au montant intermédiaire de la goulotte (1), pour ménager contre celui-ci un espace de stockage pour jarretières.

11. Répartiteur selon la revendication 3, caractérisé en ce que les tambours triples (22) comportent deux parois verticales (30) courbes et une paroi oblique (31) courbe, dont le rayon de courbure est approximativement égal au rayon de courbure limite des jarretières (9).

12. Répartiteur selon la revendication 3, caractérisé en ce que les tambours triples (22) comportent en outre au moins deux doigts de guidage (32) pour guider les jarretières (9).

13. Répartiteur selon une des revendications précédentes, caractérisé en ce que chaque cassette (4) comporte un boîtier (23), une platine (25) amovible pour supporter au moins un connecteur (16) et un couvercle (26).

14. Répartiteur selon la revendication 13, caractérisé en ce que le boîtier (23) peut recevoir des platines (23) et des couvercles de taille et de forme différentes.

15. Répartiteur selon une des revendications précédentes, caractérisé en ce que chaque cassete (4) comporte des moyens de stockage (15) pour emmagasiner les fibres optiques (13).

16. Répartiteur selon la revendication 15, caractérisé en ce que les moyens de stockage des fibres optiques (13) comportent des tambours (15).

17. Répartiteur selon la revendication 16, caractérisé en ce que les tambours (15) comportent quatre éléments courbes interceptant des angles au plus égaux à environ 30° disposés sur une circonférence de rayon approximativement égal au rayon de courbure limite des fibres optiques.

**Patentansprüche**

1. Verteiler für Lichtwellenleiter, die aus mehreren Stäben (12) bestehen, welche je als Halter für mehrere Lichtleitfasern (13) dienen, mit mindestens einem Kabelkopf, der mindestens eine Verteilerkassette (4) und eine senkrechte gerillte Kabelwanne (1) mit U-Profil aufweist, die mindestens ein Bett (7) für Schaltstrippen (9) trägt, wobei die Kabelwanne (1) innerhalb ihrer Stützen in Höhe jeder Kassette (4) Lagermittel zum Lagern der Stäbe (12) aufweist, dadurch gekennzeichnet, daß die Lagermittel für die Stäbe (12) im Inneren der Kabelwanne (1) Trommeln (6) aufweisen, die am Boden der Kabelwanne (1) befestigt sind und gemäß einer senkrechten Richtung bewegt werden können, und daß die Trommeln (6) einen Scheibensektor (16), der etwa 90° nicht übersteigt, mit einem Radius etwa gleich dem Krümmungsradius der Stäbe (12), einen kreisförmigen Rand (17), ein Loch senkrecht zu den parallelen Seiten des Sektors (16), durch das eine Schraube (18) verläuft, deren Kopf in der Nut (19) gefangen ist und deren freies Ende ein Rädchen (2) aufnimmt, und mindestens einen Führungsstift (21) aufweisen, der auf der Rückseite der Trommel angeordnet ist.

2. Verteiler nach Anspruch 1, dadurch gekennzeichnet, daß in Höhe jeder Kassette (4) die Kabelwanne (1) außerhalb ihrer Stützen vor oder hinter dem Kabelkopf Führungsmittel (22) aufweist, um Schaltstrippen (9) eine Richtungsänderung zu geben.

3. Verteiler nach Anspruch 2, dadurch gekennzeichnet, daß die Führungsmittel eine Dreifachtrommel (22) aufweisen.

4. Verteiler nach einem der vorhergehenden Ansprüche, dadurch gekennzeichnet, daß die Kabelwanne (1) außerdem außerhalb ihrer Stützen eine vordere Trommel (5) zur Führung der Schaltstrippen (9) aufweist.

5. Verteiler nach einem der vorhergehenden Ansprüche, dadurch gekennzeichnet, daß die beiden parallelen Stützen der Kabelwanne (1) einen Abstand von etwa zweimal dem Grundkrümmungsradius der Stäbe (12) haben.

6. Verteiler nach einem der vorhergehenden Ansprüche, dadurch gekennzeichnet, daß die Kabelwanne (1) Nuten aufweist, die geeignet sind, um unterschiedliche Kassetten und Zuführmittel aufzunehmen.

7. Verteiler nach einem der vorhergehenden Ansprüche, dadurch gekennzeichnet, daß die den Boden der Kabelwanne (1) bildende Stütze auf ihrer Innenseite eine mittlere Längsnut (19) aufweist.

8. Verteiler nach einem der vorhergehenden Ansprüche, dadurch gekennzeichnet, daß die Lagermittel für die Stäbe (12) im Inneren der Kabelwanne (1) an der Seite des Gehäuses (23) der Kassetten (4) parallel zum Boden der Kabelwanne (1) befestigt sind.

9. Verteiler nach Anspruch 4, dadurch gekennzeichnet, daß die vorderen Trommeln einen Zylinderabschnitt (27) aufweisen, der einen Winkel einschließt, der etwa 120° nicht übersteigt und dessen Radius in etwa gleich dem Grenzkrümmungsradius der Schaltstrippen (9) ist.

10. Verteiler nach Anspruch 4, dadurch gekennzeichnet, daß die vordere Trommel (5) einen Bereich aufweist, der seitlich in Bezug auf die Zwischenstütze der Kabelwanne (1) vorspringt, um gegen diese Stütze einen Lagerbereich für Schaltstrippen freizulassen.

11. Verteiler nach Anspruch 3, dadurch gekennzeichnet, daß die Dreifachtrommeln (22) zwei senkrechte gekrümmte Wände (30) und eine schräge gekrümmte Wand (31) aufweisen, deren Krümmungsradius etwa gleich dem Grenzkrümmungsradius der Schaltstrippen (9) ist.

12. Verteiler nach Anspruch 3, dadurch gekennzeichnet, daß die Dreifachtrommeln (22) außerdem mindestens zwei Führungsfinger (32) aufweisen, um die Schaltstrippen (9) zu führen.

13. Verteiler nach einem der vorhergehenden Ansprüche, dadurch gekennzeichnet, daß jede Kassette (4) ein Gehäuse (23), eine entfernbare platine (25), um mindestens einen Verbinder (16) zu tragen, und einen Deckel (26) aufweist.

14. Verteiler nach Anspruch 13, dadurch gekennzeichnet, daß das Gehäuse (23) Platinen (25) und Deckel verschiedener Größen und Formen aufnehmen kann.

15. Verteiler nach einem der vorhergehenden Ansprüche, dadurch gekennzeichnet, daß jede Kassette (4) Lagermittel (15) aufweist, um die Lichtleitfasern (13) zu lagern.

16. Verteiler nach Anspruch 15, dadurch gekennzeichnet, daß die Lagermittel der Lichtleitfasern (13) Trommeln (15) aufweisen.

17. Verteiler nach Anspruch 16, dadurch gekennzeichnet, daß die Trommeln (15) vier gekrümmte Elemente aufweisen, die Winkel einschließen, die höchstens gleich etwa 30° sind und die auf einem Radiusumfang in etwa gleich dem Grenzkrümmungsradius der Lichtleitfasern angeordnet sind.

**Claims**

1. A distribution frame for optical cables, where each optical cable is constituted by a plurality of cores (12), and each core supports a plurality of optical fibes (13), said distribution frame comprising at least one cable head comprising at least one distribution cassette (4) and a vertical, grooved, channel section duct supporting at least one tray (7) for jumpers (9), said duct (1) including, adjacent to each cassette (4) and inside said channel section, storage means for receiving said cable cores (12), wherein said core storage means inside said duct (1) include drums (6), fixed inside said duct, which are vertically displacable and comprise respective disk sectors (16) extending over not more than about 90°, radius of said disk sectors being approximately equal to the minimum radius of curvature of said cores (12); said drums also including a circular flange (17), a hole which is perpendicular to the parallel faces of said sector (16), and suitable for passing a bolt (18) having its head held captive in a longitudinally-extending groove (19) in the central web portion of said duct, and at least one guide peg (21) disposed on the rear face of said drum.

2. A distribution frame according to claim 1, wherein at the level of each cassette (4) the duct supports guide means (22) located on the outside of the duct, on the front, or to the rear of the cable head, said guide means (22) serving to change the direction of said jumpers (9).

3. A distribution frame according to claim 2, wherein said guide means comprise three-way drums (22).

4. A distribution frame according to one of preceding claims, wherein said duct also supports a front drum (5) located on the outside of said duct and serving to guide said jumpers (9).

5. A distribution frame according to one of preceding claims, wherein the width of the channel section between two parallel flanges of said duct is approximately twice the minimum radius of curvature for the cable cores (12).

6. A distribution frame according to one of preceding claims, wherein said duct includes grooves suitable for receiving cassettes and feed modules of different types.

7. A distribution frame according to one of preceding claims, wherein the central web portion of said channel section duct (1) has a longitudinally-extending mid groove (19) running along its inside face.

8. A distribution frame according to one of preceding claims, wherein said core storage means inside said duct (1) are fixed to the side of the housing of the cassettes (24) which is parallel to the bottom of said duct (1).

9. A distribution frame according to claim 4, wherein said front drums comprise a portion of a cylinder (27) extending over an angle of not more than about 120° and having a radius which is approximately equal to the minimum radius of curvature of the jumpers (9).

10. A distribution frame according to claim 4, wherein the front drums (5) includes a portion which projects sideways relative to the central web portion of said channel section duct (1), in order to leave a space adjacent said web portion and suitable for storing excess lengths of jumper.

11. A distribution frame according to claim 3, wherein said three-way drums (22) comprise two curved vertical walls and a curved sloping wall, with the radius of curvature of each of the walls being approximately equal to the minimum radius of curvature of the jumpers.

12. A distribution frame according to claim 3, wherein said three-way drums (22) further include at least two guide fingers (32) for guiding said jumpers (9).

13. A distribution frame according to one of preceding claims, wherein each cassette (4) comprises a housing (23), a removable plate (25) for supporting at least one connector (16), and a cover (26).

14. A distribution frame according to claim 13, wherein said housing (23) is suitable for receiving plates (23) and covers of different shapes and sizes.

15. A distribution frame according to one of preceding claims, wherein each of said cassettes (4) includes storage means (15) for receiving optical fibres (13).

16. A distribution frame according to claim 15, wherein said optical fibre (13) storage means comprise drums (15).

17. A distribution frame according to claim 16, wherein said drums (15) comprise four circular arcs extending over not more than about 30° each and disposed around a circular circumference whose radius is approximately equal to the minimum radius of curvature for the optical fibers.

Fig. 1

## Fig. 2

21
17
16
20
18
21
12
19
6

## Fig.3

Fig: 4

*Fig: 5*